Europäisches Patentamt

European Patent Office

Office européen des brevets

(11) Veröffentlichungsnummer: **0 272 616**
**A2**

## (12) EUROPÄISCHE PATENTANMELDUNG

(21) Anmeldenummer: **87118707.6**

(22) Anmeldetag: **17.12.87**

(51) Int. Cl.⁴: **H01H 50/36 , B23K 26/00**

(30) Priorität: **23.12.86 DE 3644151**

(43) Veröffentlichungstag der Anmeldung:
**29.06.88 Patentblatt 88/26**

(84) Benannte Vertragsstaaten:
**CH DE FR IT LI SE**

(71) Anmelder: **BBC Brown Boveri**
**Aktiengesellschaft**
**Kallstadter Strasse 1**
**D-6800 Mannheim 31(DE)**

(72) Erfinder: **Cwetanski, Georgi, Dipl.-Ing.**
**Hans-Purrmann-Strasse 6 b**
**D-6710 Frankenthal(DE)**
Erfinder: **Hoyer, Peter, Dr. Dipl.-Ing.**
**Ruhweg 26**
**D-6905 Schriesheim(DE)**
Erfinder: **Klempp, Roland**
**Am Leimenbuckel 22**
**D-6901 Neckarsteinach(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**D-6800 Mannheim 1(DE)**

(54) **Elektromagnetischer Schalterantrieb für ein Schaltgerät.**

(57) Ein elektromagnetischer **Schalterantrieb** mit einem zweischenkligen, gewinkelten Joch (11), dessen einer (erster) Jochschenkel (12) mit einem Ende eines Magnetkernes (10) fest verbunden ist, zeichnet sich dadurch aus, daß der Magnetkern (10) ein durchgehend gleichbleibendes Querschnittsprofil sowie ein geringfügig kleineres Längenmaß als das äußere Längenmaß (L) des zweiten Jochschenkels (13) aufweist.

Dieser Magnetkern ist in eine Ausnehmung (14) im ersten Jochschenkel haftend so tief eingefügt, daß die Endflächen (15, 16) der freien Enden des Magnetkerns und des zweiten Jochschenkels exakt und nacharbeitungsfrei in einer gemeinsamen Ebene gelegen sind. In dieser Stellung sind das Joch und der Magnetkern mittels Laserschweißung fest miteinander verbunden. Die Herstellungskosten der aus Joch und Magnetkern bestehenden Montageeinheit sind auf diese Weise deutlich zu senken, ohne die qualitativen Ansprüche zu beeinträchtigen.

Fig. 1

## Elektromagnetischer Schalterantrieb für ein Schaltgerät

Die Erfindung bezieht sich auf einen einem Schaltgerät zuordnenbaren elektrischen Schalterantrieb, welcher sich im wesentlichen aus einer Magnetspule, einem Magnetkern, einem zweischenkeligen, gewinkelten Joch, dessen einer Jochschenkel mit einem Ende des Magnetkernes fest verbunden ist, und aus einem Klappanker zusammensetzt, welch letzterer bei erregter Magnetspule mit den Endflächen der freien Enden des Magnetkernes und des anderen Jochschenkels zusammenwirkt.

Mit Klappankern ausgestattete elektromagnetische Schalterantriebe sind seit langem bekannt, auch solche, deren feststehende Eisenteile sich aus einem eine Wicklung durchdringenden Magnetkern und aus einem mit diesem Magnetkern verbundenen zweischenkligen Magnetjoch zusammensetzen. Die Verbindung zwischen dem Magnetkern und dem Joch erfolgt hierbei durch Verstemmen eines Endes des Magnetkernes in einer Öffnung des Jochs oder auch durch eine Verschweißung der beiden Teile miteinander. Beide Arten der Verbindung sind mit gewissen Nachteilen behaftet. Eine Stemmverbindung muß sehr sorgfältig ausgeführt werden, um eine hinreichende Festigkeit der herzustellenden Verbindung zu erzielen, es sollen aber auch keine Beeinträchtigungen oder gar Risse in den angrenzenden Wandlungsbereichen des Jochs entstehen. Außerdem müssen die Materialien sowohl des Magnetkerns als auch des Magnetjochs für eine Stemmverbindung geeignet sein. Bei einer Schweißverbindung besteht die Gefahr eines Verzuges der zu verbindenden Teile und - infolge der Hitzeeinwirkung die Gefahr eines geringfügigen Aufbiegens des Jochs an seiner Biegestelle. Die daraus resultierenden Richtarbeiten sind aufwendig und das Ergebnis ist - auch bei einer sorgfältigen Nachrichtung - häufig unbefriedigend. Letzteres insbesondere was die Polflächen betrifft, d. h. also die freien Enden des Magnetkernes und des mit diesem indirekt zusammenwirkenden Jochschenkels. Unerläßlich ist es in aller Regel, daß die eben genannten Polflächen einer Nacharbeit in Form eines Überschleifens bedürfen, wenn der Klappanker zufriedenstellend und (bei Wechselstrombetrieb) bzw. bei Betrieb mit pulsierendem Gleichstrom geräuscharm arbeiten soll.

Dieses Nachschleifen der Polflächen ist praktisch bei allen Verbindungsarten zwischen Magnetkern und Magnetjoch erforderlich, auch dann, wenn der Magnetkern an seinem mit dem Joch zu verbindenen Ende mit einer Querschnittsverringerung versehen ist, d. h. einen Absatz aufweist, der als Anschlag am Joch dient.

Die Erfindung stellt sich zur Aufgabe, einen elektromagnetischen Schalterantrieb der eingangs genannten Art zu schaffen, bei welchem die geschilderten Nacharbeiten entbehrlich sind, ohne Einbußen an der Maßhaltigkeit der Teile und insbesondere hinsichtlich der gewünschten Planparallelität der Polflächen in Kauf nehmen zu müssen.

Außerdem soll der zu schaffende Magnetantrieb besonders wirtschaftlich herstellbar sein.

Die Lösung dieser Aufgabenstellung wird durch die vorliegende Erfindung erzielt, welche im kennzeichnenden Teil des Anspruches 1 zum Ausdruck kommt. Die Verwendung eines Magnetkernes mit durchgehend gleichbleibendem Querschnittsprofil stellt eine besonders wirtschaftliche Ausführungsform dar, im Gegensatz zu Magnetkernen mit Verjüngungen an ihrem Befestigungsende. Die Wahl eines Längenmaßes für den Magnetkern, welches geringfügig kleiner ist als das äußere Längenmaß des parallel verlaufenden (zweiten) Jochschenkels, in Verbindung mit Querschnittsmaßen des Magnetkernes, welche seine haftende Einfügung in den (ersten) Jochschenkel gestatten, eröffnen die Möglichkeit, diesen Magnetkern exakt so tief in den zuletzt genannten Jochschenkel einzufügen, daß die Endflächen des ersten Jochschenkels und des freien Endes des Magnetkernes nacharbeitungsfrei exakt in einer gemeinsamen Ebene liegen. Die Anwendung einer Laserschweißung für die feste Verbindung des Magnetkernes mit dem Joch stellt hierbei sicher, daß praktisch keine Verzugserscheinungen auftreten, da die Erhitzungszonen beim Schweißvorgang sehr eng begrenzt bleiben. Auf diese Weise ist die Eisenbestückung des elektromagnetischen Schalterantriebes bezüglich der kritischen Maße sehr exakt herstellbar und zugleich sehr wirtschaftlich in der Herstellung. Es kommt hinzu, daß sowohl der Magnetkern als auch das Joch bereits vor dem Schweißvorgang einen Oberflächenschutz erhalten können, der durch ein späteres Überschleifen der Polflächen nicht beschädigt wird.

Eine vorteilhafte Verbesserung bei der Ausgestaltung des Erfindungsgedankens ist in dem Vorschlag zu sehen, die Ausnehmung im ersten Jochschenkel für die Aufnahme des Magnetkernes mit wenigstens einer ihre lichte Kontur geringfügig verengenden Einformung zu versehen, welche die haftende Aufnahme des Magnetkernes während des Herstellungsvorganges bewirkt oder mindestens unterstützt. Auf diese Weise kann auf eine enge Tolerierung der Querschnittsmaße des Magnetkernes und auch der besagten Ausnehmung im ersten Jochschenkel durchaus verzichtet werden.

Eine Präzisierung des vorgenannten Vorschlages ist in der nachfolgenden Bemessungsregel zu sehen, nämlich für die die lichte Kontur der Ausnehmung verengende Einformung ein Ausmaß von 0,5 % bis 2.0 % des lichten Durchmessers (bei einem runden Magnetkern) bzw. des lichten Breitenmaßes der Ausnehmung (bei einem im Querschnitt rechteckigen Magnetkern) vorzusehen. Derartig bemessene Einformungen vermögen die Toleranzen zwischen dem Querschnittsmaß des Magnetkernes und den Maßen der Ausnehmung sehr wohl auszugleichen und eine gut haftende Verbindung zwischen dem Magnetkern und dem Joch herzustellen, ohne daß es einer besonders aufwendigen Verpreßtechnik bedarf. Auch spröde Eisenmaterialien sind durch derartige Maßnahmen im geschilderten Ausmaß praktisch nicht beeinträchtigt.

Eine vorteilhafte Herstellungsmöglichkeit für die eben genannten Einformungen ist in dem Vorschlag zu sehen, diese Einformung durch Verformung einer nahegelegenen Außenrandung des ersten Jochschenkels herzustellen. Dieses Vorgehen erweist sich insbesondere bei einem Magnetkern und dementsprechend bei einer Ausnehmung mit einem deutlich rechteckigen Querschnitt (womit gemeint ist, daß die Querschnittlänge ein Mehrfaches der Querschnittsbreite beträgt) als zweckmäßig. Hierdurch ist die Herstellung der Stanzvorrichtungen für das Stanzen der Ausnehmung im ersten Jochschenkel einfacher, ohne auf den Vorteil einer "Einformung" verzichten zu müssen.

Anhand von in der Zeichnung dargestellten Ausführungsbeispielen und der nachfolgenden Beschreibung hierzu sollen der Erfindungsgedanke und seine Gestaltungsmöglichkeiten noch einmal erläutert und verdeutlicht werden.

Es zeigt:

Figur 1 in perspektivischer Darstellung eine Eisenkonstruktion für einen elektromagnetischen Antrieb der zur Rede stehenden Art,

Figur 2 eine Seitensicht auf die in Figur 1 gezeigte Konstruktion

Figur 3 eine Draufsicht auf die in Figur 2 gezeigte Konstruktion,

Figur 4 eine Draufsicht auf ein Magnetjoch mit einer besonderen Gestaltung seiner Ausnehmung für einen Magnetkern und

Figur 5 eine weitere Draufsicht auf ein Magnetjoch mit einer anders als in Figur 4 gestalteten und hergestellten Ausnehmung für einen Magnetkern.

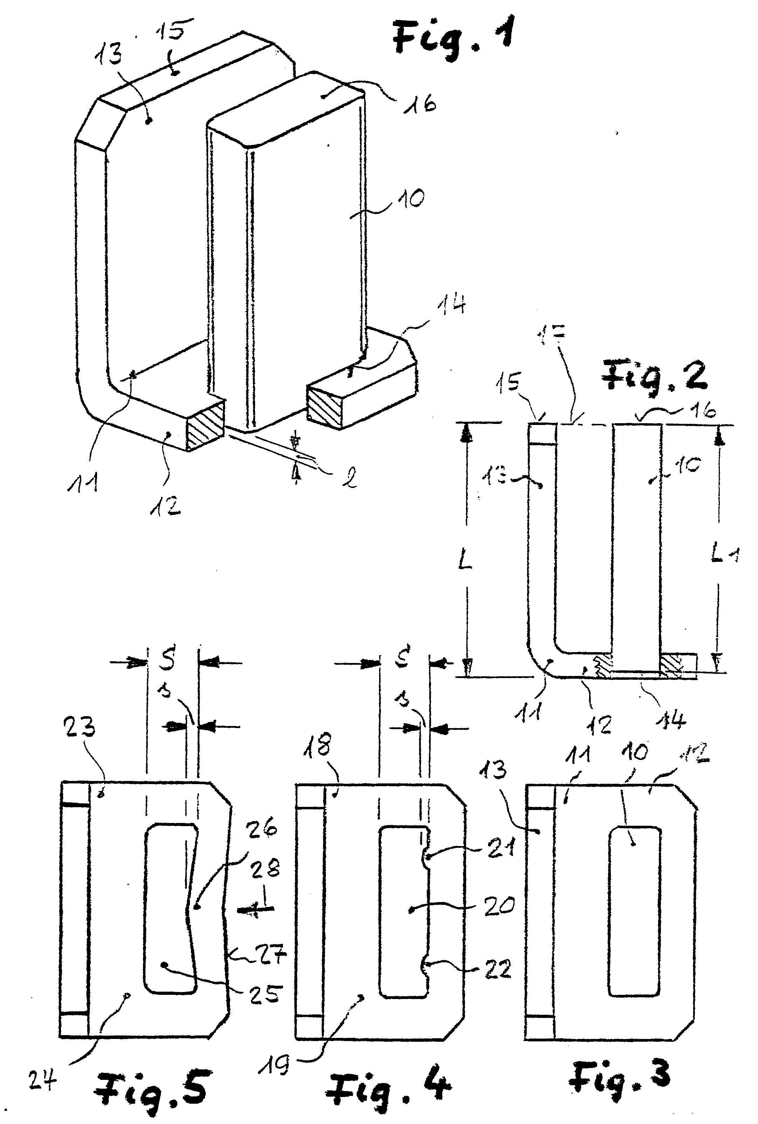

Die **Figur 1** veranschaulicht in perspektivischer Darstellung eine Eisenkonstruktion für einen elektromagnetischen Schalterantrieb mit einer Klappanker-Betätigung. Erkennbar sind ein Magnetkern 10 mit einem rechteckigen Querschnitt und leicht abgerundeten Querschnittsecken sowie ein Magnetjoch 11, welches sich als abgewinkeltes Teil mit einem ersten Jochschenkel 12 und einem zweiten Jochschenkel 13 darstellt. Erkennbar ist, daß der zweite Jochschenkel 13 und der Magnetkern 10 parallel zueinander verlaufen. Das in der Darstellung nach unten weisende Ende des Magnetkerns 10 ist in eine Ausnehmung 14 im ersten Jochschenkel 12 eingefügt. Aus Anschauungsgründen ist ein Teil des ersten Jochschenkels 12 in der Darstellung ausgeschnitten bezeigt, wodurch erkennbar ist, daß das in der Darstellung nach unten gerichtete Ende des Magnetkernes 10 nicht bündig bis zur unteren Fläche des ersten Jochschenkels 12 reicht oder aus der Ausnehmung 14 sogar nach unten herausragt, sondern stattdessen - und das ganz bewußt - um einen Betrag "l" zurückspringt. Durch Maßpfeile ist dieser Rücksprung in seinem Ausmaß kenntlich gemacht. Entscheidend bei der Montage des Magnetkerns 10 mit dem Magnetjoch 11 ist allerdings nicht die Einhaltung des Rücksprung-Maßes "l", sondern vielmehr eine so tiefe Einfügung des Magnetkernes 10 in die Ausnehmung 14, daß die in der Darstellung nach oben gerichteten freien Endflächen 15 und 16 des zweiten Jochschenkels 13 und des Magnetkernes 10 exakt in einer gemeinsamen Ebene gelegen sind. Diese beiden Endflächen 15 und 16 dienen der Anlage eines aus dieser Darstellung nicht zu entnehmenden Magnetankers. Nicht unterwähnt auch an dieser Stelle bleibe, daß der Magnetkern 10 in seiner in die Ausnehmung 14 eingefügten Lage in dieser Ausnehmung haftet. Eine derartige Haftverbindung wäre allerdings nicht den Belastungen eines häufigen Schaltbetriebes voll gewaschsen, weshalb nach der genannten Montage eine mittels Laserschweißung hergestellte unlösbare Verbindung des Magnetkernes 10 mit dem ersten Jochschenkel 12 vorgesehen ist.

In der **Figur 2** ist die in der Figur 1 veranschaulichte Eisenkonstruktion noch einmal in einer Seitensicht dargestellt. Erkennbar sind der Magnetkern 10 und das Magnetjoch 11 mit seinem ersten Jochschenkel 12 und dem zweiten Jochschenkel 13. Besser als in der zuvor erläuterten Darstellung ist hier nun auch erkennbar, daß die freien Endflächen 15 und 16 des Magnetkerns 10 und des zweiten Jochschenkels 13 in einer exakt gemeinsamen, durch eine Strich-Punkt-Strich-Linie angedeuteten Ebene 17 gelegen sind. Im übrigen ist durch Maßpfeile dasjenige Maß des zweiten Jochschenkels 13 gekennzeichnet und mit der Längenbezeichnung "L" beziechnet worden, welches als "äußeres Längenmaß" des zweiten Jochschenkels 13 definiert worden ist. Demgegenüber steht - ebenfalls durch Maßpfeile verdeutlich - das Längenmaß "L₁" des Magnetkerns 10. Es gilt hierbei die Beziehung: $L$ größer als $L_1$. Die Längendifferenz zwischen $L$ und $L_1$ entspricht dem Wert "l", worauf in der Figur 1 bereits Bezug genommen worden ist. Wie ersichtlich. ist das in der Darstellung nach unten weisende Ende des Magnetkerns 10 durch einen Aufbruch des ersten Jochschenkels 12 erkennbar. Nicht zu entnehmen dieser Darstellung ist es, daß dieses untere Ende des Magnetkerns 10 etwas angefast sein oder mit einer ganz gerinfügigen Verjüngung ausgestattet sein kann. Derartige Maßnahmen erleichtern das Einfügen des Magnetkerns 10 in die Ausnehmung 14 im ersten Jochschenkel 12.

Die **Figur 3** veranschaulicht eine Draufsicht auf die in Figur 2 gezeigte Konstruktion. oder anders gesagt: Auf das Magnetjoch 11 mit seinen Jochschenkeln 12 und 13 und dem damit montierten Magnetkern 10. Zu entnehmen dieser Darstellung ist die Querschnittsform des Magnetkernes 10. die also eine Rechteckform mit leicht abgerundeten Ecken hat, wobei die Länge der in der Darstellung senkrecht verlaufenden Seitenkante der Rechteckform ein Mehrfaches der Länge der angrenzenden Rechteckseiten aufweist. Diese Darstellung in Figur 3 würde sich übrigens nicht unterscheiden von einer solchen. in der der Magnetkern 12 **nicht** enthalten wäre. d. h. wenn lediglich das Magnetjeoch 11 in seiner Draufsicht gezeigt worden wäre.

Ein Magnetjoch 18 in einer Draufsicht gemäß Figur 3 veranschaulicht die **Figur 4**. Im Unterschied zum zuvor erläuterten Ausführungsbeispiel weist dieses Magnetjoch 18 in seinem ersten Jochschenkel 19 zwar auch eine Ausnehmung 20 für die Aufnahme eines Magnetkerns auf, die Kontur dieser Ausnehmung 20 enthält jedoch zwei buckelartige Einformungen 21 und 22. Diese Einformungen 21 und 22 erlauben es, sowohl für die Ausnehmung 20 als auch für den Querschnitt eines einzufügenden Magnetkernes gröbere Toleranzen vorzusehen und dennoch eine gut haftende Einfügung des besagten Magnetkernes in diese Ausnehmung 20 zu erzielen. Aus Anschauungsgründen sind dieser Einformungen 21 und 22 recht weit vorstehend dargestellt, in Wirklichkeit soll ihr Ausmaß in Richtung der gegenüberliegenden Seitenwandung der Ausnehmung 20 nur etwa 0,5 % bis 2,0 % des lichten Breitenmaßes der Ausnehmung 20 betragen. Durch Maßpfeile ist das lichte Breitenmaß "S" der Ausnehmung 20 gekennzeichnet und durch weitere Maßpfeile das Ausmaß "s" der Einformungen 21 und 22 in gezeigter Richtung. Hierbei gilt dann, wie oben bereits angedeutet, die Beziehung: s = S x 0,5 % ...2,0 %.

Eine Abwandlung der eben erläuterten Ausführungsform eines Magnetjoches zeigt die **Figur 5**. Auch das hier erkennbare Magnetjoch 23 weist in einem ersten Jochschenkel 24 eine Ausnehmung 25 auf, und auch die Innenkontur dieser Ausnehmung 25 ist mit einer Einformung 26 versehen. Außer dem Unterschied zum zuvor erläuterten Ausführungsbeispiel gemäß Figur 4, wonach hier nun nur **eine** Einformung 26 vorhanden ist, ist auch die Herstellung dieser Einformung 26 anders vorgesehen. Die Ausnehmung 25 wird nämlich zunüchst (wenn man von den Abrundungen in den Ecken absieht) rechteckig hergestellt entsprechend der Darstellung in Figure 3. Sodann wird in einem folgenden Herstellungsschritt die verbleibende Wandung zwischen dieser Ausnehmung 25 und dem freien Ende 27 des ersten Jochschenkels 24 in Richtung des angedeuteten Pfeiles 28 verformt. und zwar so weit, bis die Einformung 26 das erwünschte Ausmaß hat. Auch hier gilt für das Ausmaß "s" der Einformung 26 im Verhältnis zur lichten Breite "S" der Ausnehmung 25 das oben bereits Gesagte: s = S x 0.5 % ... 2.0 %.

Was die Ausbildung und Anordnung der Einformungen (21. 22: 26) im jeweils ersten Jochschenkel betrifft, so zeigen die Darstellungen lediglich mögliche Ausführungsbeispiele. Es ist sehr wohl möglich, anders gestaltete Einformungen oder auch anders gelegene Einformungen vorzusehen. ohne den erwünschten Effekt einzubüßen.

Bezugszeichenliste

    10 Magnetkern
    11 Magnetjoch
    12 erster Jochschenkel
    13 zweiter Jochschenkel
    14 Ausnehmung in 12
    15 freie Endfläche von 13
    16 freie Endfläche von 10
    17 gemeinsame Ebene von 15 und 16
    18 Magnetjoch
    19 erster Jochschenkel von 18
    20 Ausnehmung in 19
    21, 22 buckelartige Einformungen in 20
    23 Magnetjoch
    24 erster Jochschenkel von 23
    25 Ausnehmung in 24
    26 Einformung
    27 freies Ende von 24
    28 Pfeil/Verformungsrichtung von 27

**Ansprüche**

1. Einem Schaltgerät zuordenbarer elektromagnetischer **Schalterantrieb** welcher sich im wesentlichen aus einer Magnetspule, einem Magnetkern, einem zweischenkligen, gewinkelten Joch. dessen einer (erster) Jochschenkel mit einem Ende des Magnetkernes fest verbunden ist, und aus einem Klappanker zusammensetzt, welch letzter bei erregter Magnetspule mit den Endflächen der freien Enden des Magnetkernes und des anderen (zweiten) Jochschenkels zusammenwirkt,

dadurch gekennzeichnet,
daß der Magnetkern (10) ein durchgehend gleichbleibendes Querschnittsprofil aufweist sowie ein Längenmaß ($L_1$), welches geringfügig kleiner ist, als das äußere Längenmaßg (L) des zweiten Jochschenkels (13),
daß im ersten Jochschenkel (12) eine Ausnehmung (14) angeordnet ist, in welche der Magnetkern haftend so tief eingefügt ist, daß die Endflächen (15, 16) der freien Enden des Magnetkerns und des zweiten Jochschenkels exakt und nacharbeitungsfrei in einer gemeinsamen Ebene (17) gelegen sind,
und daß der erste Jochschenkel sowie der in dessen Ausnehmung eingefügte Magnetkern mittels Laserschweißung fest miteinander verbunden sind.

2. Schalterantrieb nach Anspruch 1, dadurch gekennzeichnet, daß die Ausnehmung (20; 25) im ersten Jochschenkel (19; 24) für die Aufnahme des Magnetkernes (10) wenigstens eine ihre lichte Kontur geringfügig verändernde Einformung (21, 22; 26) aufweist, welche die haftende Aufnahme des Magnetkerns bewirkt oder unterstützt. (Figuren 4 und 5).

3. Schalterantrieb nach Anspruch 2, dadurch gekennzeichnet, daß die die lichte Kontur der Ausnehmung verengende Einformung (21, 22; 26) ein Ausmaß (s) von 0,5 % bis 2,0 % des lichten Durchmessers (bei einem runden Magnetkern) bzw. des lichten Breitenmaßes (S) (bei einem im Querschnitt rechteckigen Magnetkern) der Ausnehmung (20; 25) aufweist. (Figuren 4 und 5).

4. Schalterantrieb nach Anspruch 2 oder 3, dadurch gekennzeichnet, daß die die lichte Kontur der Ausnehmung (25) verengende Einformung (26) durch Verformung einer nahegelegenen Außenrandung (27) des ersten Jochschenkels (24) hergestellt ist. (Figur 5).

Fig. 1

Fig. 2

Fig. 5

Fig. 4

Fig. 3